# EUROPÄISCHE PATENTANMELDUNG

(11) **EP 1 722 295 A1**
(43) Veröffentlichungstag der Anmeldung: **15.11.2006**
(21) Anmeldenummer: 05010170.8
(22) Anmeldetag: 10.05.2005
(51) Int. Cl.: G06F 3/033

(54) **Verfahren, Vorrichtung und Computerprogrammprodukt zur Bereitstellung von Benutzerinformationen innerhalb einer grafischen Benutzeroberfläche**

(71) Anmelder: SIEMENS AKTIENGESELLSCHAFT, 80333 München (DE)
(72) Erfinder: Hey, Uwe, 90475 Nürnberg (DE); Weinländer, Markus, 91230 Happurg (DE)

(57) **Zusammenfassung**

Die Erfindung betrifft ein Verfahren, ein Computerprogrammprodukt und eine Vorrichtung zur Bereitstellung von Benutzerinformationen zu einem von einem Anwender mit einem Zeigerwerkzeug (1) innerhalb einer grafischen Benutzeroberfläche (2) selektierten Bildschirmobjekt (3). Um bei der Bedienung des Zeigerwerkzeugs (1) eine möglichst umfassende Hilfestellung zur Verfügung zu stellen, werden folgende Verfahrensschritte vorgeschlagen:
- Erkennen des selektierten Bildschirmobjektes (3),
- kontinuierliches Erfassen der Position des selektierten Bildschirmobjektes (3) innerhalb der grafischen Benutzeroberfläche (2), während das Bildschirmobjekt (3) von dem Anwender mit dem Zeigerwerkzeug (1) bewegt wird,
- Anzeigen eines Fensters (4), welches der Position des selektierten Bildschirmobjektes (3) folgt und textbasierte Informationen enthält, die abhängig von der Position des selektierten Bildschirmobjektes (3) sind.

## Beschreibung

Die Erfindung betrifft ein Verfahren, eine Vorrichtung und ein Computerprogrammprodukt zur Bereitstellung von Benutzerinformationen zu einem von einem Anwender mit einem Zeigerwerkzeug innerhalb einer grafischen Benutzeroberfläche selektierten Bildschirmobjekt. Die Erfindung kommt insbesondere bei einem Bewegen des selektierten Bildschirmobjektes mit Hilfe des Zeigerwerkzeuges zum Einsatz.

Die meisten Computerprogramme verfügen heutzutage über eine grafische Benutzeroberfläche (Graphical User Interface, GOI), innerhalb der ein Anwender mit Hilfe eines Zeigerwerkzeugs, z.B. einem Mauszeiger, Bedienoperationen innerhalb des Computerprogramms durchführen kann. Ein typisches Beispiel für eine derartige Interaktion eines Anwenders mit einem Computerprogramm ist das so genannte "Drag'n'Drop". Hierbei selektiert der Anwender zunächst ein Objekt auf dem Bildschirm, in dem er mit der Maus auf dieses Objekt zeigt und eine entsprechende Maustaste drückt. Der Anwender hält die Maustaste gedrückt und bewegt den Mauszeiger zusammen mit dem selektierten Objekt über die grafische Benutzeroberfläche in einen anderen Bildschirmbereich. Durch eine geeignete Visualisierung wird dem Anwender hierbei angezeigt, dass er das Objekt auf diesen anderen Bildschirmbereich ziehen kann. Lässt der Anwender die Maustaste los, so wird das Bildschirmobjekt auf den anderen Bildschirmbereich "Fallen gelassen".

Abhängig von dem Bildschirmbereich, in den der Anwender das selektierte Objekt ziehen möchte, kann es vorkommen, dass das "Fallen lassen" (die Drop-Operation) nicht zulässig ist. Ein Beispiel hierfür ist z.B. ein Dateimanagementsystem, wie der Windows Explorer, bei dem ein Anwender versucht, eine Datei auf einen schreibgeschützten oder vollen Datenträger zu ziehen. Wird von dem Dateimanagementsystem erkannt, dass der Anwender eine derartige unzulässige Aktion plant, so wird dies im Allgemeinen von dem Anwendungsprogramm durch eine veränderte Visualisierung des Mauszeigers angezeigt. Typischerweise wird ein Verbotsschild neben dem Mauszeiger auf der grafischen Benutzeroberfläche platziert.

Insbesondere in komplexen Engineeringsystemen ist die Gefahr für einen Anwender groß, eine unzulässige Drag'n'Drop Aktion durchführen zu wollen. Ein Beispiel für eine solche unzulässige Drag'n'Drop Aktion eines Anwenders ist z.B. der Versuch, ein Steuerungsprogrammobjekt von einen SPS-Controller auf einen HMI-Panel per Drag'n'Drop zu kopieren. Dies ist auf Grund der technischen Eigenschaften der Geräte nicht erlaubt.

Der Erfindung liegt die Aufgabe zugrunde, einem Anwender einer grafischen Benutzeroberfläche bei der Bedienung eines Zeigerwerkzeugs eine möglichst umfassende Hilfestellung zur Verfügung zu stellen.

Diese Aufgabe wird gelöst, durch ein Verfahren zur Bereitstellung von Benutzerinformationen zu einem von einem Anwender mit einem Zeigerwerkzeug innerhalb einer grafischen Benutzeroberfläche selektierten Bildschirmobjekt mit folgenden Verfahrensschritten:
- Erkennen des selektierten Bildschirmobjektes,
- kontinuierliches Erfassen der Position des selektierten Bildschirmobjektes innerhalb der grafischen Benutzeroberfläche, während das Bildschirmobjekt von dem Anwender mit dem Zeigerwerkzeug bewegt wird,
- Anzeigen eines Fensters, welches der Position des selektierten Bildschirmobjektes folgt und textbasierte Informationen enthält, die abhängig von der Position des selektierten Bildschirmobjektes sind.

Ferner wird diese Aufgabe durch ein Computerprogrammprodukt zur Durchführung des oben genannten Verfahrens gelöst.

Weiterhin wird die Aufgabe gelöst, durch eine Vorrichtung zur Bereitstellung von Benutzerinformationen zu einem von einem Anwender mit einem Zeigerwerkzeug innerhalb einer grafischen Benutzeroberfläche selektierten Bildschirmobjekt mit:
- Erkennungsmitteln zum Erkennen des selektierten Bildschirmobjektes,
- Erfassungsmitteln zum kontinuierlichen Erfassen der Position des selektierten Bildschirmobjektes innerhalb der grafischen Benutzeroberfläche, während das Bildschirmobjekt von dem Anwender mit dem Zeigerwerkzeug bewegt wird,
- Anzeigemitteln zum Anzeigen eines Fensters, welches der Position des selektierten Bildschirmobjektes folgt und textbasierte Informationen enthält, die abhängig von der Position des selektierten Bildschirmobjektes sind.

Als Zeigerwerkzeug sind hier Bildschirmelemente zu verstehen, die von dem Anwender mit Hilfe eines technischen Gerätes direkt innerhalb der Benutzeroberfläche bewegbar sind. Ein typisches Beispiel für ein derartiges Zeigerwerkzeug ist ein Mauszeiger, den ein Anwender mit Hilfe einer elektronischen Maus über die Benutzeroberfläche bewegen kann. Alternativ kann ein solcher Zeiger bzw. ein solches Zeigerwerkzeug z.B. auch mit Hilfe eines Touchpads oder eines Trackballs bewegt werden, um nur einige Beispiele zu nennen.

Erfindungsgemäß wird zusätzlich zum Zeigerwerkzeug ein weiteres Fenster angezeigt, das automatisch der Position des Zeigerwerkzeuges folgt, wenn dieses vom Anwender bewegt wird. Innerhalb des Fensters werden Informationen in Textform für den Anwender dargestellt, die abhängig von der Position des selektierten Bildschirmobjektes und somit abhängig von der Position des Zeigerwerkzeuges innerhalb der grafischen Benutzeroberfläche sind. Auf diese Art und Weise erhält der Anwender bei der Bewegung des selektierten Objektes mit Hilfe des Zeigerwerkzeuges über den Bildschirm stets aktuelle Informationen, die im Kontext zur aktuellen Position des selektierten Bildschirmobjektes stehen. Durch die Darstellung dieser Informationen in Textform, ist die Flexibilität bei der Bereitstellung der Informationen sehr groß. Da die Position des Fensters an die Position des Zeigerwerkzeuges gekoppelt ist, befinden sich die innerhalb des Fensters dargestellten Informationen stets im aktuellen Fokus des Anwenders. Diese Vorgehensweise steht im Gegensatz zu so genannten Tooltipps, die in der Regel an einer Position aufgeblendet werden und dort unabhängig von der Position des von dem Anwender bewegten Zeigerwerkzeuges verbleiben.

Bei einer vorteilhaften Ausgestaltung des erfindungsgemäßen Verfahrens enthalten die textbasierten Informationen Hinweise über die Zulässigkeit einer vom Anwender mit dem Zeigerwerkzeug durchgeführten Drag'n'Drop Operation. Versucht beispielsweise der Anwender eine Datei innerhalb eines Dateimanagementsystem wie dem Windows Explorer per Drag'n'Drop von einem Datenträger zu einem anderen Datenträger zu kopieren, wobei der andere Datenträger schreibgeschützt ist, so wird innerhalb des Fensters eine entsprechende Information in Textform dargestellt, die den Anwender schon während der Drag'n'Drop Operation über diese unzulässige Handlung informiert. Innerhalb des an das Zeigerwerkzeug gekoppelten Fensters wird beispielsweise der Hinweis dargestellt, dass es sich bei dem auf dem anderen Datenträger befindlichen Zielordner um einen schreibgeschützten Ordner handelt. Auf diese Art und Weise wird der Anwender nicht nur über die Unzulässigkeit der geplanten Drag'n'Drop Operation schon während des Verschiebens des selektierten Bildschirmobjektes über die Benutzeroberfläche informiert. Vielmehr wird dem Anwender sofort der Grund für die Unzulässigkeit der geplanten Operation vermittelt. Derart differenzierte Ausgabeinformationen erlauben den Einsatz von Drag'n'Drop Operationen auch in sehr viel komplexeren Anwendungen als Dateimanagementsystemen. Vorteilhafterweise wird das Fenster semitransparent dargestellt. Hierdurch können die Bildschirminformationen, die sich unterhalb des an das Zeigerwerkzeug gekoppelten Fensters befinden, weiterhin durch den Anwender erfasst werden.

In einer vorteilhaften Ausführungsform der Erfindung wird das Fenster bei einer Verschiebe- oder Kopieraktion innerhalb eines Dateimanagementsystems angezeigt. Hierbei ist es möglich, durch die textbasierte Form der Informationen innerhalb des Fensters dem Anwender sehr viel differenziertere Informationen über seine geplanten Verschiebe- oder Kopieraktionen zu geben, als dies heutzutage durch das bloße Anzeigen eines an das Zeigerwerkzeug gekoppelten Verbotsschildes erfolgt.

Besonders zweckmäßig ist eine Ausführung des Verfahrens zur Bereitstellung der Benutzerinformationen innerhalb eines Engineeringsystems für die Automatisierungstechnik. In derartigen komplexen Computerprogrammprodukten kann durch die textbasierte Informationsgestaltung innerhalb des an das Zeigerwerkzeug gekoppelten Fensters die Erlernbarkeit des Programms stark verbessert werden. Die Erfindung ermöglicht darüber hinaus eine höhere Effizienz bei der Arbeit, da dem Anwender sofort die Ursache eines Problems angezeigt wird, welches bei einer von ihm geplanten unzulässigen Verschiebe- oder Kopieraktion mit Hilfe des Zeigerwerkzeuges entstehen würde. Durch die textbasierte Informationsdarstellung innerhalb des Fensters während einer Drag'n'Drop Operation muss der Anwender nicht erst in einer Hilfefunktion oder ähnlichem nach einer passenden Problembeschreibung suchen.

Im Folgenden wird die Erfindung anhand der in den Figuren dargestellten Ausführungsbeispiele näher beschrieben und erläutert. Es zeigen:
- FIG 1: eine Drag'n'Drop Aktion eines Anwenders in einem Dateimanagementsystem gemäß Stand der Technik
- FIG 2: eine Drag'n'Drop Aktion eines Anwenders in einem Dateimanagementsystem gemäß einer Ausführungsform der Erfindung

- FIG 3: eine Drag'n'Drop Aktion eines Anwenders in einem Engineeringsystem gemäß einer weiteren Ausführungsform der Erfindung

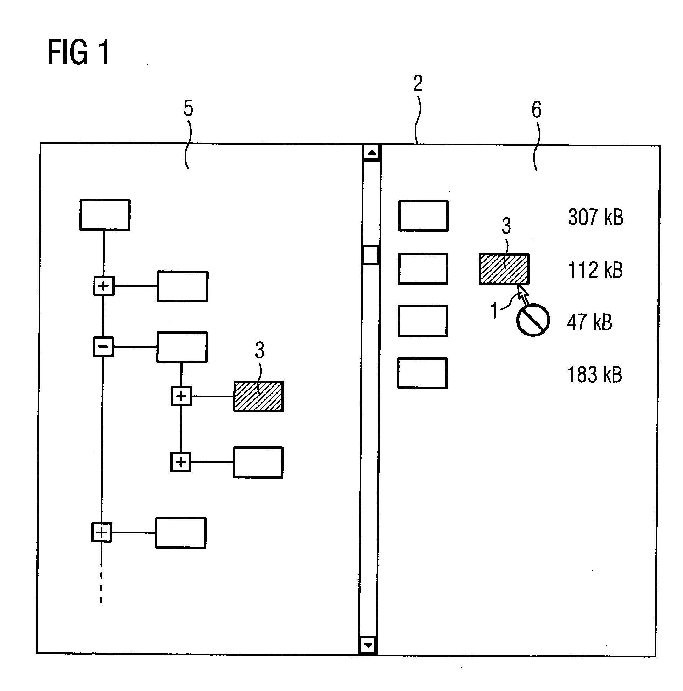

FIG 1 zeigt eine Drag'n'Drop Aktion eines Anwenders in einem Dateimanagementsystem gemäß Stand der Technik. Das Dateimanagementsystem weist eine grafische Benutzeroberfläche 2 auf, die einen ersten Bereich 5 und einen zweiten Bereich 6 umfasst. Innerhalb des ersten Bereichs 5 ist eine hierarchische Verzeichnisstruktur in Form eines Baumes dargestellt. Der zweite Bereich 6 hingegen zeigt die Elemente einer Hierarchieebene der Verzeichnisstruktur. Bei der dargestellten "Drag'n'Drop" Aktion hat der Anwender zunächst mit Hilfe eines Mauszeigers 1 ein Bildschirmobjekt 3, eine Datei des Dateimanagementsystems, innerhalb des ersten Bereiches 5 markiert, in dem er den Mauszeiger 1 auf die Datei 3 bewegt hat und die linke Maustaste gedrückt hat. Anschließend bewegt der Anwender den Mauszeiger 1 bei gedrückter linker Maustaste in den zweiten Bereich 6, um die markierte Datei 3 in die entsprechende Verzeichnisebene zu verschieben. Diese Aktion wird jedoch vom System als unzulässig erkannt, was durch die Darstellung eines Verbotszeichens 7 unterhalb des Mauszeigers 1 kenntlich gemacht wird. Der Anwender erhält jedoch keinerlei Hinweise darüber, warum die von ihm geplante Drag'n'Drop Aktion nicht zulässig ist.

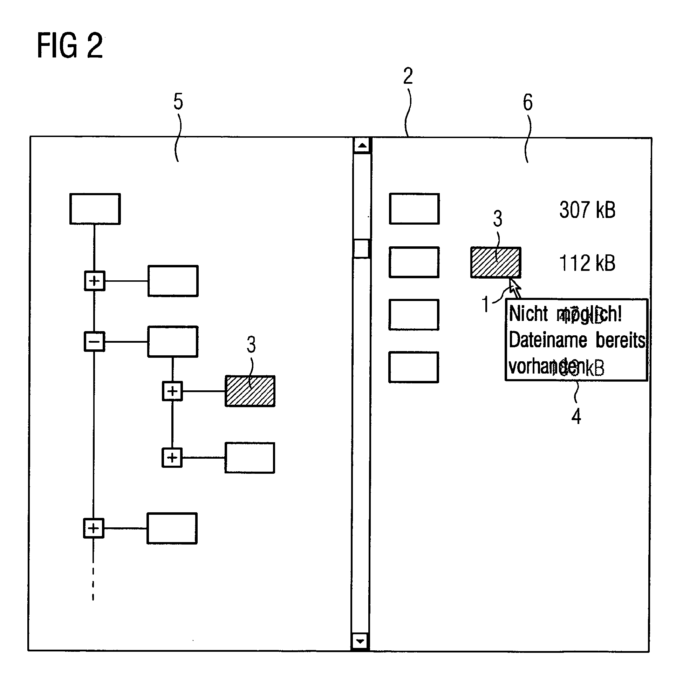

FIG 2 zeigt eine Drag'n'Drop Aktion eines Anwenders in einem Dateimanagementsystem gemäß einer Ausführungsform der Erfindung. Für gleiche Elemente sind hierbei die gleichen Bezugszeichen wie in FIG 1 verwendet worden. Auch bei dem hier dargestellten Fall, versucht der Anwender das selektierte Bildschirmobjekt 3, welches auch in diesem Fall eine Datei einer hierarchischen Dateistruktur bezeichnet, in einen anderen Ordner hinein zu verschieben. Ähnlich wie in FIG 1 sei auch hier angenommen, dass die gezeigte Drag'n'Drop Aktion nicht zulässig ist. In diesem Fall wird jedoch, sobald der Anwender die selektierte Datei 3 mit Hilfe des Mauszeigers 1 von dem ersten Bereich 5 in den zweiten Bereich 6 verschiebt, ein Fenster 4 unterhalb des Mauszeigers 1 angezeigt, welches dem Anwender einen Hinweis darauf gibt, warum die von ihm geplante Drag'n'Drop Aktion nicht möglich ist. Es wird in diesem Fall der Hinweis innerhalb des Fensters 4 eingeblendet, dass der Dateiname bereits vorhanden ist. Somit bekommt der Anwender des Dateimanagementsystems direkt Auskunft darüber, warum die Kopier- bzw. Verschiebeaktion unzulässig ist, ohne hierfür Handbücher oder ähnliche Hilfestellung durchsuchen zu müssen. Die Position des Fensters 4 ist fest an den Mauszeiger 1 gekoppelt, so dass sich der Fenster bzw. dessen Inhalt stets im Fokus des Anwenders befindet. Weiterhin ist das Fenster 4 semitransparent dargestellt, so dass sich Bildschirmelemente, die unterhalb des Fensters 4 positioniert sind, weiterhin erkennbar sind. Im dargestellten Fall handelt es sich um die Größe der innerhalb des zweiten Bereichs dargestellten Ordner.

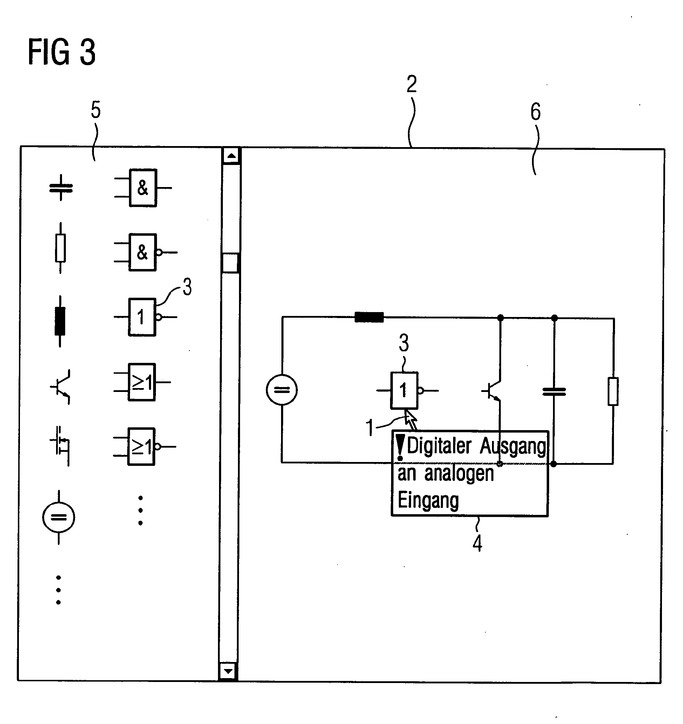

FIG 3 zeigt eine Drag'n'Drop Aktion eines Anwenders in einem Engineeringsystem gemäß einer weiteren Ausführungsform der Erfindung. Auch das dargestellte Engineeringsystem weist wiederum eine grafische Benutzeroberfläche 2 auf, die in einen ersten Bereich 5 und einen zweiten Bereich 6 unterteilt ist. Mit Hilfe des dargestellten Engineeringsystems lassen sich elektrische, elektronische und logische Schaltungen entwerfen, simulieren und auf ein Echtzeitsystem übertragen. Ein Anwender eines derartigen Systems hat die Möglichkeit, innerhalb des zweiten Bereichs 6 eine solche Schaltung aufzubauen, in dem er die entsprechende Elemente aus dem ersten Bereich 5 in den zweiten Bereich 6 kopiert und innerhalb des zweiten Bereiches miteinander verdrahtet. Hierzu kann er mit Hilfe eines Zeigerwerkzeuges 1, bei dem es sich insbesondere um einen Mauszeiger handelt, ein Element des ersten Bereichs 5 auswählen und per Drag'n'Drop in den zweiten Bereich 6 ziehen. Bei dieser Ausführungsform der Erfindung wird nun bei einer derartigen Drag'n'Drop Aktion überprüft, ob diese im Kontext der Anwendung sinnvoll bzw. zulässig ist. In dem dargestellten Fall hat der Anwender eine leistungselektronische Schaltung, einen so genannten Tiefsetzsteller, aus den Elementen des ersten Bereichs 5 aufgebaut. Um die Schaltung zu vervollständigen, möchte der Anwender noch eine Ansteuerschaltung für den dargestellten Transistor entwerfen.

Innerhalb des ersten Bereiches 5 stehen dem Anwender elektrische, elektronische und logische Bausteine zur Verfügung. Der Anwender selektiert hierbei mit dem Mauszeiger 1 ein als Inverter ausgeführtes Bildschirmelement 3 und versucht es direkt mit dem Basiseingang des Transistors zu verbinden. Sobald der Anwender den Inverter 3 in unmittelbare Nähe des Transistors mit Hilfe des Mauszeigers 1 verschiebt, öffnet sich unterhalb des Mauszeigers 1 ein Fenster 4, in dem der Anwender darüber aufgeklärt wird, dass er plant, einen digitalen Ausgang mit einem analogen Eingang zu verbinden. Auf diese Art und Weise wird der Anwender schon auf einen möglichen Fehler bei der Konstruktion einer derartigen elektronischen Schaltung aufmerksam gemacht, bevor er diese fertig gestellt hat. Dies stellt einen entscheidenden Vorteil zu heute gängigen Engineeringsystemen bzw. Schaltungssimulationsprogrammen dar, bei denen derartige Verdrahtungsfehler erst anhand späterer Ergebnisse oder in einer Compilierphase erkennbar werden.

In dem dargestellten Ausführungsbeispiel ist das Fenster 4 mit dem Anwenderhinweis semitransparent dargestellt, so dass die unterhalb des Fensters 4 liegenden Elemente der elektronischen Schaltung weiterhin sichtbar bleiben.

## Patentansprüche

1. Verfahren zur Bereitstellung von Benutzerinformationen zu einem von einem Anwender mit einem Zeigerwerkzeug (1) innerhalb einer grafischen Benutzeroberfläche (2) selektierten Bildschirmobjekt (3) mit folgenden Verfahrensschritten:
- Erkennen des selektierten Bildschirmobjektes (3),
- kontinuierliches Erfassen der Position des selektierten Bildschirmobjektes (3) innerhalb der grafischen Benutzeroberfläche (2), während das Bildschirmobjekt (3) von dem Anwender mit dem Zeigerwerkzeug (1) bewegt wird,
- Anzeigen eines Fensters (4), welches der Position des selektierten Bildschirmobjektes (3) folgt und textbasierte Informationen enthält, die abhängig von der Position des selektierten Bildschirmobjektes (3) sind.

2. Verfahren nach Anspruch 1,
wobei die textbasierten Informationen Hinweise über die Zulässigkeit einer vom Anwender mit dem Zeigerwerkzeug (1) durchgeführten Drag'n'Drop Operation enthalten.

3. Verfahren nach einem der Ansprüche 1 oder 2,
wobei das Fenster (4) semitransparent dargestellt wird.

4. Verfahren nach einem der vorhergehenden Ansprüche,
wobei das Fenster bei einer Verschiebe- oder Kopieraktion innerhalb eines Dateimanagementsystems angezeigt wird.

5. Verfahren nach einem der vorhergehenden Ansprüche,
wobei das Verfahren zur Bereitstellung der Benutzerinformationen innerhalb eines Engineeringsystems für die Automatisierungstechnik vorgesehen ist.

6. Computerprogrammprodukt zur Durchführung eines Verfahrens nach einem der Ansprüche 1 bis 5.

7. Vorrichtung zur Bereitstellung von Benutzerinformationen zu einem von einem Anwender mit einem Zeigerwerkzeug (1) innerhalb einer grafischen Benutzeroberfläche (2) selektierten Bildschirmobjekt (3) mit:
- Erkennungsmitteln zum Erkennen des selektierten Bildschirmobjektes (3),
- Erfassungsmitteln zum kontinuierlichen Erfassen der Position des selektierten Bildschirmobjektes (3) innerhalb der grafischen Benutzeroberfläche (2), während das Bildschirmobjekt (3) von dem Anwender mit dem Zeigerwerkzeug (1) bewegt wird,
- Anzeigenmitteln zum Anzeigen eines Fensters (4), welches der Position des selektierten Bildschirmobjektes (3) folgt und textbasierte Informationen enthält, die abhängig von der Position des selektierten Bildschirmobjektes (3) sind.

8. Vorrichtung nach Anspruch 7,
wobei die textbasierten Informationen Hinweise über die Zulässigkeit einer vom Anwender mit dem Zeigerwerkzeug (1) durchgeführten Drag'n'Drop Operation enthalten.

9. Vorrichtung nach einem der Ansprüche 7 oder 8,
wobei die Anzeigemittel zur semitransparenten Darstellung des Fensters (4) vorgesehen sind.

10. Vorrichtung nach einem der Ansprüche 7 bis 9,
wobei die Anzeigemittel zur Anzeige des Fensters bei einer Verschiebe- oder Kopieraktion innerhalb eines Dateimanagementsystems vorgesehen sind.

11. Vorrichtung nach einem der Ansprüche 7 bis 10,
wobei die Vorrichtung zur Bereitstellung der Benutzerinformationen innerhalb eines Engineeringsystems für die Automatisierungstechnik vorgesehen ist.
